# EUROPÄISCHE PATENTSCHRIFT

(11) **EP 2 745 987 B1**
(45) Veröffentlichungstag und Bekanntmachung des Hinweises auf die Patenterteilung: **22.02.2017**
(21) Anmeldenummer: 13194293.0
(22) Anmeldetag: 25.11.2013
(51) Int. Cl.: B25B 11/00, B23Q 1/03, B25B 1/24

(54) **Spannvorrichtung**
Clamping device
Dispositif de serrage

(30) Priorität: 21.12.2012 DE 102012224280
(43) Veröffentlichungstag der Anmeldung: 25.06.2014
(73) Patentinhaber: J. Schmalz GmbH, 72293 Glatten (DE)
(72) Erfinder: Stockburger, Ralf, 72293 Glatten (DE); Conzelmann, Timo, 72293 Glatten (DE)
(74) Vertreter: DREISS Patentanwälte PartG mbB

(56) Entgegenhaltungen:
- EP-A1- 1 256 421
- EP-A2- 0 280 245
- DE-A1-102005 050 649
- GB-A- 868 162
- SU-A1- 1 079 373
- US-A1- 2009 309 284

## Beschreibung

Die Erfindung betrifft eine Spannvorrichtung mit einer Abstützvorrichtung und einer Saugeinrichtung zum Ansaugen eines zu spannenden Werkstücks gemäß dem Oberbegriff des Anspruchs 1.

Eine derartige Spannvorrichtung ist aus der EP 0 280 245 A2 bekannt. Die DE 10 2007 020 898 A1 zeigt eine weitere Spannvorrichtung. Stand der Technik zu Abstützvorrichtungen lässt sich z.B. der US 2009/0309284 A1, DE 10 2005 050 649 A1, DE 198 10 478 B4, DE 10 2005 022 887 A1 oder der DE 41 35 490 C1 entnehmen. Eine weitere Spannvorrichtung ist aus der DE 10 2005 050 649 A1 bekannt. Diese Spannvorrichtung besitzt einen Saugraum zum Ansaugen eines zu spannenden Werkstücks, wobei im Saugraum insgesamt vier Positionierstifte vorgesehen sind, die mehr oder weniger weit aus dem Saugraum herausragen. Eine andere Ausführungsform sieht vor, dass die Saugeinrichtung als Faltenbalgsauger ausgebildet ist, welcher von vier Positionierstiften umgeben ist. Diese Positionierstifte tauchen in ein Gehäuse ein und können in diesem axial verschoben werden. Zum Spannen dieser Positionierstifte dient ein radial auf den Positionierstift wirkender Bolzen, eine Klemmbuchse, welche den Positionierstift klemmt oder ein exzentrisch ausgebildetes und drehbares Klemmmittel, welches ebenfalls radial auf den Positionierstift wirkt. Diese einzelnen Klemmmittel müssen jeweils einzeln angesteuert werden, z.B. mittels eines Druckmediums. Hierfür bedarf es jeweils eines Kanals zum Führen des Druckmediums. Dieser Aufbau kann unter Umständen sehr aufwändig werden, wenn die Spannvorrichtung mit einer Vielzahl von Positionierstiften versehen ist.

Aus der DE 197 02 848 C1 ist eine Haltevorrichtung für Werkstücke bekannt, bei welcher eine Vielzahl von Positionierstiften in einem Gehäuse angeordnet sind. Diese Positionierstifte sind in axialer Richtung verfahrbar und in radialer Richtung gegeneinander verspannbar. Auf diese Weise können die Haltestifte in beliebiger axialer Position gehalten werden.

Schließlich sind aus der DE 198 10 478 B4 und der EP 1 249 328 B1 Abstützvorrichtungen mit Positionierstiften bekannt.

Mit den oben benannten Vorrichtungen können Werkstücke mit unebenen Oberflächen, d.h. mit dreidimensional geformten Oberflächen oder schräg liegende Werkstücke abgestützt werden. Dabei werden die Positionier- oder Haltestifte mehr oder weniger weit in die Vorrichtung eingeschoben und dann fixiert.

Der Erfindung liegt die Aufgabe zugrunde, eine Spannvorrichtung zum Spannen von dreidimensional geformten Werkstücken mit unebenen Oberflächen oder mit einer schräg liegenden Oberfläche zu schaffen, die einen einfachen Aufbau aufweist und preiswert herstellbar ist.

Diese Aufgabe wird mit einer Spannvorrichtung der eingangs genannten Art durch die Merkmale des Anspruchs 1 gelöst. Bei der erfindungsgemäßen Spannvorrichtung werden alle Positionierstifte mit einem einzigen Spannelement, nämlich einem Kolben, gespannt, wobei der Kolben auf die Klemmhülse oder die Klemmhülsen wirkt. Der Kolben verschiebt die Klemmhülse in radialer Richtung, wodurch eine radial wirkende Kraft auf den Positionierstift wirkt, so dass der Positionierstift in seiner ihn aufnehmenden Bohrung verspannt wird. Abhängig von der Radialkraft können sehr hohe Kräfte von den Positionierstiften abgestützt werden. Ein wesentlicher Vorteil der Erfindung besteht darin, dass lediglich noch ein einziges Element, nämlich der Kolben, angetrieben werden muss, so dass nur noch eine einzige Pneumatik- oder Hydraulikleitung an den Kolben herangeführt werden muss. Dabei kann der Kolben mit Überdruck oder Unterdruck betrieben werden, wobei ein Überdruck bevorzugt wird, da hierdurch höhere Kräfte ausgeübt werden können. Die Rückstellung erfolgt mittels einer Rückstellfeder, z.B. einer Wendelfeder oder Tellerfeder. Entweder die Spannlage oder die geöffnete Lage kann die Endlage des Kolbens darstellen.

Eine andere Ausführungsform sieht vor, dass der Kolben ausschließlich mittels eines Fluids betätigt wird, z.B. mit Überdruck in die Spannlage und mit Unterdruck zurück in die Öffnungsposition bewegt wird. In diesem Fall bedarf es keiner Rückstellfeder. Als Fluid sind Gase und Flüssigkeiten denkbar. Vorteilhaft wird Luft verwendet.

Bei einer Weiterbildung der Erfindung sind die Positionierstifte am Umfang des Zylinders, insbesondere mit gleichen Abständen zueinander, angeordnet und tauchen in die Zylinderumfangswand axial ein. Die Zylinderwand dient zur Führung der Positionierstifte und stützt diese sowie das darauf abgelegte Werkstück ab. Ferner sind Rückstellfedern, insbesondere die Positionierstifte umgreifende Wendelfedern, vorgesehen, die die Positionierstifte aus dem Gehäuse drängen. Die Positionierstifte nehmen also im unbelasteten Zustand, in welchem kein Werkstück auf der Spannvorrichtung aufliegt, eine Position ein, in welcher sie vollständig aus dem Gehäuse ausgefahren sind.

Bei einer Weiterbildung der Erfindung ist vorgesehen, dass das Gehäuse einen radialen Schlitz aufweist, welcher von den Positionierstiften axial durchgriffen wird und in welchem die Klemmhülse gelagert ist. Dabei kann sich die Klemmhülse in der Ebene des radialen Schlitzes, d.h. in radialer Richtung bewegen, wohingegen die Klemmhülse insbesondere spielfrei in axialer Richtung in den radialen Schlitz eingepasst ist.

An jedem Positionierstift ist eine Klemmhülse vorgesehen. Somit können die einzelnen Positionierstifte unabhängig voneinander geklemmt werden.

Die Klemmhülse umgreift den Positionierstift und der Positionierstift ist in der Klemmhülse axial verfahrbar. Wird die Klemmhülse radial gegenüber dem Positionierstift verschoben, dann wird eine Klemmkraft auf den Positionierstift ausgeübt, die ein Verschieben des Positionierstifts gegenüber der Klemmhülse und ein Verschieben des Positionierstifts im Gehäuse verhindert.

Die Klemmhülse weist eine kegel- oder kegelstumpfförmige Außenkontur auf. Hierdurch kann durch axiale Annäherung eines Betätigungselements an die Klemmhülse die Klemmhülse radial verschoben werden, wobei über den Kegelwinkel die Anpresskraft auf ein Vielfaches verstärkt werden kann.

Mit Vorzug weist der Kolben an seinem aus dem Zylinder ragenden Ende einen kegelstumpfförmigen Abschnitt auf. Dieser kegelstumpfförmige Abschnitt des Kolbens wirkt nun als Betätigungselement, wobei das kegelstumpfförmige Ende an der Außenkontur der Klemmhülse angreift und diese radial nach außen presst. Hierdurch werden gleichzeitig alle Positionierstifte geklemmt. Vorzugsweise ist der kegelstumpfförmige Abschnitt des Kolbens geringfügig in radialer Richtung schwimmend gelagert, so dass er sich exakt zentrieren und an allen Klemmhülsen anliegen kann. Dabei weisen alle Klemmhülsen den gleichen radialen Abstand zum Kolben auf.

Bei einer bevorzugten Variante der Erfindung ist vorgesehen, dass eine den Kolben in eine Endstellung drängende Feder, insbesondere Rückstellfeder, vorgesehen ist. Dabei kann die Endstellung des Kolbens die Klemmstellung oder die gelöste Stellung darstellen. Wird der Kolben über die Rückstellfeder z.B. in die Klemmstellung gedrängt, dann nimmt der Kolben diese Stellung auch bei einem Druckabfall ein.

Bei einem bevorzugten Ausführungsbeispiel ist die Saugeinrichtung, z.B. ein Faltenbalgsauger, von den Positionierstiften umgeben. Dies bedeutet, dass das Werkstück nicht nur exakt positioniert, sondern über den Faltenbalgsauger auch festgehalten wird. Durch die Integration des Faltenbalgsaugers zwischen die Positionierstifte kann die erfindungsgemäße Spannvorrichtung relativ klein gebaut werden.

Bei einem anderen Ausführungsbeispiel ist die Saugeinrichtung, z.B. ein Flachsauggreifer, an den freien Enden der Positionierstifte befestigt. Hierdurch wird die Möglichkeit geschaffen, die Saugeinrichtung auf die Normale der Oberfläche des anzusaugenden Werkstücks auszurichten, so dass dieses optimal angesaugt werden kann.

Bei einer weiteren Ausführungsform der Erfindung weist die Klemmhülse einen axialen Schlitz auf. Am freien Ende des Kolbens ist ein Mitnehmer für Spannhülsen vorgesehen. Die Spannhülsen übergreifen die Klemmhülsen und mittels des Kolbens sind die Spannhülsen axial auf die Klemmhülsen aufpressbar. Die Spannhülsen sind mit radialem Spiel am Kolben befestigt und werden von diesem in axialer Richtung bewegt. Hierdurch können Fertigungstoleranzen ausgeglichen werden. Der Kolben greift somit indirekt an den Klemmhülsen an.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
Figur 1 eine perspektivische Ansicht einer ersten Ausführungsform der erfindungsgemäßen Spannvorrichtung;
Figur 2 eine Seitenansicht der Spannvorrichtung gemäß Figur 1;
Figur 3 einen Längsschnitt durch die Spannvorrichtung gemäß Figur 1;
Figur 4 eine perspektivische Ausführungsform eines zweiten Ausführungsbeispiels der Erfindung, teilweise geschnitten;
Figur 5 einen Längsschnitt durch die Spannvorrichtung gemäß einer dritten Ausführungsform; und
Figur 6 eine vergrößerte Wiedergabe des Ausschnitt IV gemäß Figur 5.

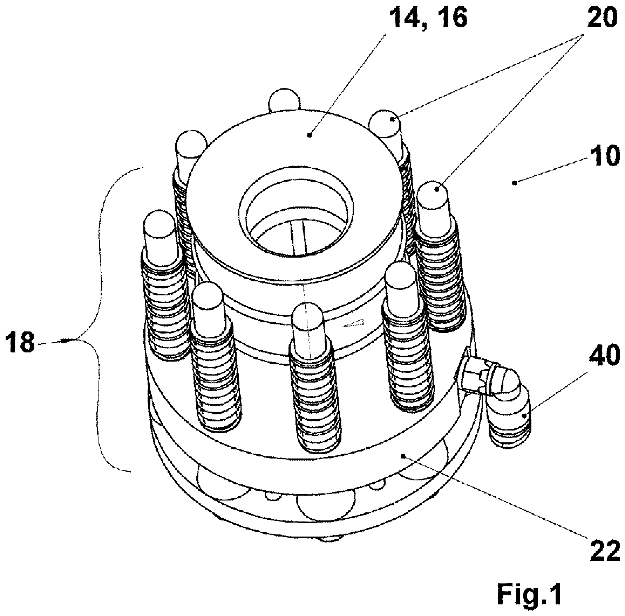

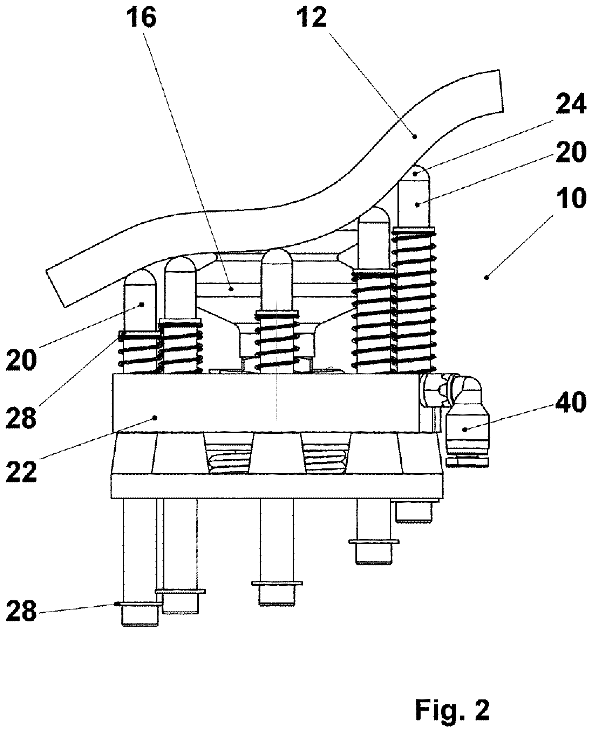

Die Figur 1 zeigt eine erste Ausführungsform einer ersten perspektivischen Ansicht einer insgesamt mit 10 bezeichneten Spannvorrichtung zum Spannen unebener Werkstücke 12 (siehe Figur 2), wobei die Spannvorrichtung 10 eine zentrale Saugeinrichtung 14 in Form eines Faltenbalgsaugers 16 aufweist. Die Saugeinrichtung 14 ist von einer Abstützvorrichtung 18 umgeben, welche mehrere Positionierstifte 20 aufweist, wobei die Saugeinrichtung 14 und die Abstützvorrichtung 18 in die gleiche Richtung, nachfolgend als die axiale Richtung bezeichnet, ausgerichtet sind. Die Saugeinrichtung 14 und die Abstützvorrichtung 18 sind an einem Gehäuse 22 befestigt, welches seinerseits an einem (nicht dargestellten) Roboterarm montiert sein kann.

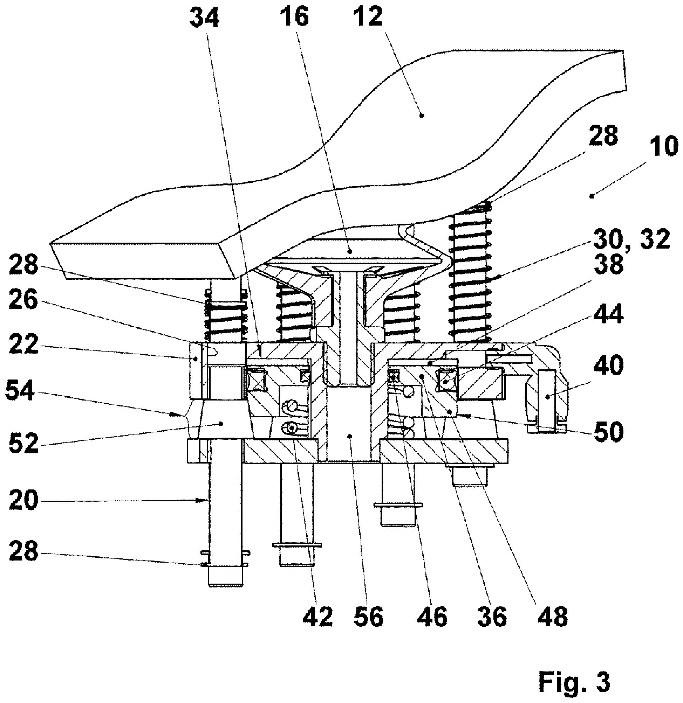

Die Figur 2 zeigt eine Seitenansicht der Spannvorrichtung 10, wobei das Werkstück 12 sowohl abgestützt als auch gespannt ist. Wie aus der Figur 2 deutlich erkennbar, weisen die Positionierstifte 20 halbkugelförmige Spitzen 24 auf, welche am Werkstück 12 anliegen. Außerdem liegt am Werkstück 12 das Ansaugende des Faltenbalgsaugers 16 an, wobei sich der hochflexible Faltenbalgsauger 16 an die im Raum gekrümmte Oberfläche des Werkstücks 12 anpasst. Die Anpassung der Abstützvorrichtung 18 an die im Raum gekrümmte Oberfläche des Werkstücks 12 erfolgt dadurch, dass die Positionierstifte 20 mehr oder weniger weit in das Gehäuse 22 eingeschoben sind. Hierfür weist das Gehäuse 22 (gemäß Figur 3) axiale Durchbrüche 26 (Bohrungen) auf, wobei am unteren Ende des Positionierstifts 20 ein Federring 28 vorgesehen ist, der das Herausrutschen des unteren Endes verhindert. Im Bereich der Spitze 24 ist ebenfalls ein Federring 28 vorgesehen, an welchem eine als Wendelfeder 30 ausgebildete Rückstellfeder 32 angreift. Diese stützt sich an der Oberseite des Gehäuses 22 ab.

Ferner ist in Figur 3 noch erkennbar, dass das Gehäuse 22 als Zylinder 34 ausgebildet ist und einen Kolben 36 aufnimmt, wobei der Zylinder 34 und der Kolben 36 einen Hubraum 38 einschließen, der mit Druckluft beaufschlagt werden kann, die über eine Zuleitung 40 zugeführt wird. Der Kolben 36 ist in der Figur 3 in seiner Ruhelage dargestellt, in welche er von einer Rückstellfeder 42 gedrängt wird. Am Außenumfang des Kolbens 36 ist eine Dichtung 44 und an der radial inneren Umfangsfläche eine Dichtung 46 erkennbar, die den Kolben 36 im Zylinder 34 abdichten. Außerdem weist das freie, aus dem Zylinder 34 in der Figur 3 nach unten herausragende Ende 48 des Kolbens 36 einen kegelstumpfförmigen Abschnitt 50 auf. Dieser Abschnitt 50 ist mehreren Klemmhülsen 52 benachbart, die auf die Positionierstifte 20 aufgeschoben sind. Diese Klemmhülsen 52 liegen in einem radialen Schlitz 54 des Gehäuses 22, wobei die Klemmhülsen 52 im Schlitz 54 in radialer Richtung geringfügig verschiebbar, jedoch in axialer Richtung spielfrei gelagert sind. Die Klemmhülsen 52 besitzen eine kegelstumpfförmige Außenkontur, wobei der Kegelwinkel dem des Abschnitts 50 entspricht. Wird der Kolben 36 axial in Richtung auf die Klemmhülsen 52 verlagert, dann liegt der Abschnitt 50 an den Klemmhülsen 52 linienförmig an.

Besteht die Aufgabe, ein Werkstück 12 mit einer dreidimensional gekrümmten Oberfläche nicht nur anzusaugen, sondern auch abzustützen, dann kann dies mit der erfindungsgemäßen Spannvorrichtung 10 erreicht werden. Die Spannvorrichtung 10 wird mittels eines Roboterarms entweder einzeln oder im Verbund mit weiteren Spannvorrichtungen 10 an das abzustützende und zu spannende Werkstück 12 herangeführt und derart angepresst, dass die Positionierstifte 12 in das Gehäuse 22 eintauchen. Eine derartige Position ist in der Figur 2 dargestellt. Eine permanente Anlage der Positionierstifte 20 am Werkstück 12 wird durch die Rückstellfedern 23 garantiert. Dabei legt sich auch das freie Ende des Faltenbalgsaugers 16 am Werkstück 12 an. Anschließend wird über die Zuleitung 40 Druckluft dem Hubraum 38 zugeführt, wodurch der Kolben 36 aus dem Zylinder 34 gedrängt wird. Dabei legt sich der Abschnitt 50 an den einzelnen Klemmhülsen 52 an und verlagert diese radial nach außen. Dadurch werden in diesem Bereich der Klemmhülsen 52 auch die Positionierstifte 20 radial nach außen gedrängt oder zumindest kraftbeaufschlagt, wodurch sie sich in den Durchbrüchen 26 des Gehäuses 22 verklemmen. Dadurch wird die augenblickliche Position der einzelnen Positionierstifte 20 fixiert. Das Ansaugen des Werkstücks 12 erfolgt nun dadurch, dass am Unterdruckanschluss 56 ein Unterdruck angelegt wird, so dass der Faltenbalgsauger 16 das Werkstück 12 ansaugt. Ein derart gespanntes Werkstück 12 kann nun im Raum verschwenkt werden, ohne dass sich die Position des Werkstücks 12 bezüglich der Spannvorrichtung 10 ändert.

Das Lösen des Werkstücks 12 erfolgt dadurch, dass der Faltenbalgsauger 16 belüftet und die Druckluft aus dem Hubraum 36 abgeblasen wird. Die Rückstellfeder 42 drängt den Kolben 36 zurück in den Zylinder 34, wodurch die Klemmhülsen 52 gelöst werden, so dass die Rückstellfedern 32 die Positionierstifte 20 aus dem Gehäuse 22 ausfahren.

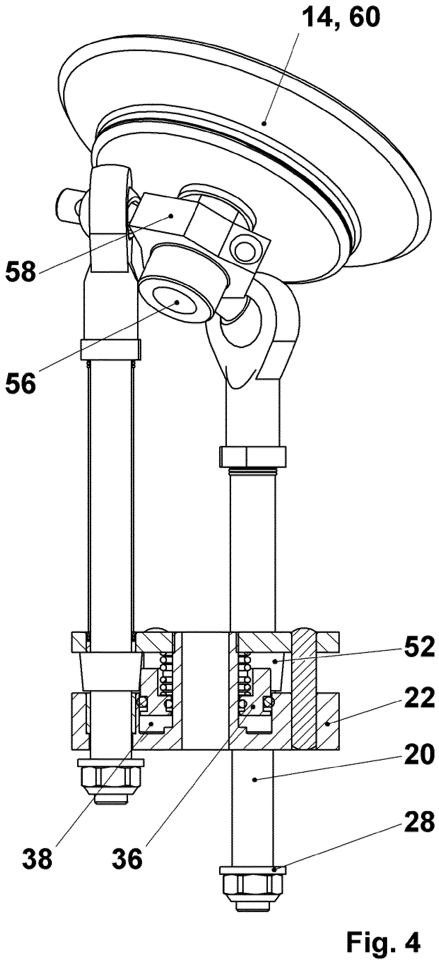

Die Figur 4 zeigt eine zweite Ausführungsform der Erfindung, bei welcher das Gehäuse 22 mit drei Positionierstiften 20 bestückt ist. An den freien Enden der Positionierstifte 20 ist kardanisch ein Träger 58 für die Saugeinrichtung 14, in diesem Fall z.B. einen Flachsauggreifer 60, befestigt. Soll mit dieser Spannvorrichtung 10 ein Werkstück 12 mit einer unebenen oder schräg liegenden Oberfläche angesaugt werden, dann legt sich beim Annähern der Spannvorrichtung 10 an das Werkstück 12 der Flachsauggreifer 60 flächig an die Oberfläche an und es werden die Positionierstifte 20 mehr oder weniger weit in das Gehäuse 22 eingeschoben. Der Unterdruckanschluss 56 wird quasi zur Normalen der Oberfläche des Werkstücks 12 ausgerichtet. Die aktuelle Lage der Positionsstifte 20 im Gehäuse 22 wird, wie oben bereits beschrieben, über den Kolben 36 und die Klemmhülsen 52 fixiert. Dies hat den wesentlichen Vorteil, dass Werkstücke 12 auch mit weniger flexiblen Saugeinrichtungen 14 optimal gegriffen werden können und hohe Saugkräfte ausgeübt werden können. Die Abstützung erfolgt bei diesen relativ steifen Saugeinrichtungen 14 über die Saugeinrichtung 14 selbst.

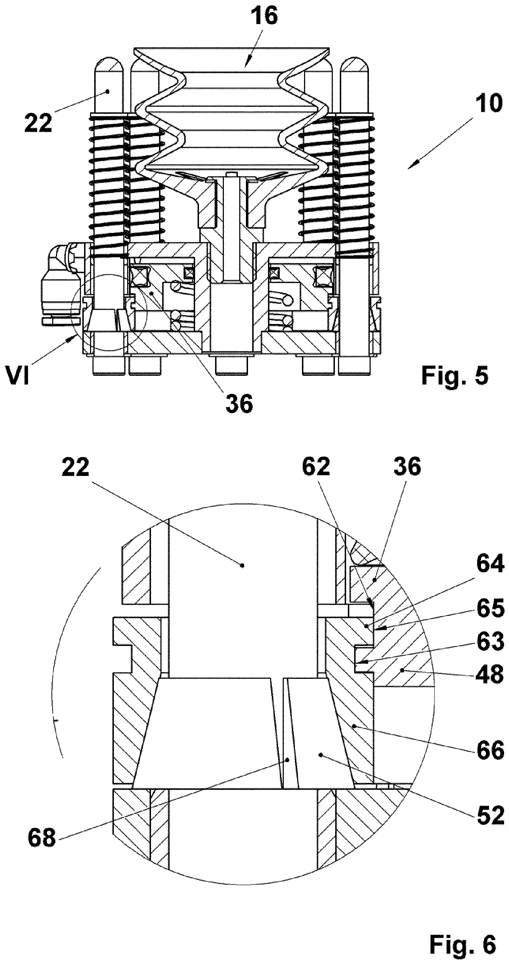

Die Figuren 5 und 6 zeigen ein drittes Ausführungsbeispiel der erfindungsgemäßen Spannvorrichtung 10, bei welcher das freie Ende 48 des Kolbens 36 eine Umfangsnut 62 aufweist. In diese Umfangsnut 62 greift ein Umfangswulst 64 einer Spannhülse 66, die die Klemmhülse 52 übergreift. Die Innenumfangsfläche der Spannhülse 66 weist eine der Außenumfangsfläche der Klemmhülse 52 entsprechende Kegelform auf. Wird der Kolben 36 in die Klemmposition, d.h. aus dem Zylinder 34 verschoben, dann werden mit dem Kolben 36 die Spannhülsen 66 auf die Klemmhülsen 52 axial aufgeschoben. Ein Verkippen der Spannhülsen 66 wird größtenteils dadurch verhindert, dass sowohl der Abschnitt 48 des Kolbens 36 als auch die Spannhülse 66 mit einer Umfangsnut 62 und 63 und mit einem Umfangswulst 64 und 65 versehen sind. Zudem greift die Spannhülse 66 mit radialem Spiel am Kolben 36 an. Weiterhin ist in den Figuren 5 und 6 erkennbar, dass die Klemmhülse 52 einen axialen Schlitz 68 aufweist, so dass sie sich optimal an den Positionierstift 22 anlegen kann.

## Patentansprüche

1. Spannvorrichtung (10) mit einer Abstützvorrichtung (18) und einer Saugeinrichtung (14) zum Ansaugen eines zu spannenden Werkstücks (12), wobei die Abstützvorrichtung (18) ein einen Zylinder (34) bildendes Gehäuse (22) aufweist, an dem wenigstens drei in eine axiale Richtung abragende und axial verfahrbare Positionierstifte (20) vorgesehen sind, wobei im Zylinder (34) neben den Positionierstiften (20) ein Kolben (36) angeordnet ist, der entlang der axialen Richtung bewegbar ist, wobei an jedem Positionierstift (20) eine Klemmhülse (52) vorgesehen ist,
wobei der Kolben (36) auf sämtliche Klemmhülsen (52) derart wirkt, dass an deren Mantel der Kolben (36) direkt oder indirekt in seiner Klemmstellung angreift und auf diese eine Radialkraft ausübt, so dass der Positionierstift (20) im Gehäuse (22) radial verlagert wird und entlang der axialen Richtung verklemmt, wobei die Klemmhülse (52) den Positionierstift (20) umgreift und der Positionierstift (20) in der Klemmhülse (52) entlang der axialen Richtung verfahrbar ist,
**dadurch gekennzeichnet, dass** die Klemmhülse (52) eine kegel- oder kegelstumpfförmige Außenkontur aufweist.

2. Spannvorrichtung nach Anspruch 1, **dadurch gekennzeichnet, dass** die Positionierstifte (20) am Umfang des Zylinders (34), insbesondere mit gleichen Abständen zueinander, angeordnet sind und in die Zylinderumfangswand entlang der axialen Richtung eintauchen.

3. Spannvorrichtung nach einem der vorhergehenden Ansprüche, **dadurch gekennzeichnet, dass** an den Positionierstiften (20) diese aus dem Gehäuse (22) drängende Rückstellfedern (32), insbesondere die Positionierstifte (20) umgreifende Wendelfedern (30), vorgesehen sind.

4. Spannvorrichtung nach einem der vorhergehenden Ansprüche, **dadurch gekennzeichnet, dass** im Gehäuse (22) ein radialer Schlitz (54) vorgesehen ist, welcher von den Positionierstiften (20) durchgriffen wird und in dem die Klemmhülse (52) gelagert ist.

5. Spannvorrichtung nach einem der vorhergehenden Ansprüche, **dadurch gekennzeichnet, dass** an jedem Positionierstift (20) eine Klemmhülse (52) angreift.

6. Spannvorrichtung nach einem der vorhergehenden Ansprüche, **dadurch gekennzeichnet, dass** der Kolben (36) an seinem aus dem Zylinder (34) ragenden Ende einen kegelstumpfförmigen Abschnitt (50) aufweist.

7. Spannvorrichtung nach Anspruch 6, **dadurch gekennzeichnet, dass** der kegelstumpfförmige Abschnitt (50) des Kolbens (36) in seiner Klemmstellung an der Klemmhülse (52) angreift.

8. Spannvorrichtung nach einem der vorhergehenden Ansprüche, **dadurch gekennzeichnet, dass** alle Klemmhülsen (52) gleichen radialen Abstand zum Kolben (36) aufweisen.

9. Spannvorrichtung nach einem der vorhergehenden Ansprüche, **dadurch gekennzeichnet, dass** eine den Kolben (36) in eine Endstellung drängende Rückstellfeder (42), insbesondere Wendelfeder, vorgesehen ist.

10. Spannvorrichtung nach einem der vorhergehenden Ansprüche, **dadurch gekennzeichnet, dass** die Saugeinrichtung (14), z.B. ein Faltenbalgsauger (16), von den Positionierstiften (20) umgeben ist, oder dass die Saugeinrichtung (14), z.B. ein Flachsauggreifer (60), an den freien Enden der Positionierstifte (20) befestigt ist.

11. Spannvorrichtung nach einem der vorhergehenden Ansprüche, **dadurch gekennzeichnet, dass** die Klemmhülse (52) einen Schlitz (68) entlang der axialen Richtung aufweist.

12. Spannvorrichtung nach einem der vorhergehenden Ansprüche, **dadurch gekennzeichnet, dass** am freien Ende (48) des Kolbens (36) ein Mitnehmer für Spannhülsen (66) vorgesehen ist, dass die Spannhülsen (66) die Klemmhülsen (52) übergreifen und mittels des Kolbens (36) entlang der axialen Richtung auf die Klemmhülsen (52) aufpressbar sind.

## Claims

1. A clamping device (10) comprising a supporting device (18) and a suction unit (14) for suctioning a workpiece (12) to be clamped, wherein the supporting device (18) has a housing (22) forming a cylinder (34), on which housing there are provided at least three axially displaceable positioning pins (20), which protrude in an axial direction, wherein, in addition to the positioning pins (20), a piston (36) is also arranged in the cylinder (34) and is movable along the axial direction, wherein a clamping collet (52) is provided on each positioning pin (20),
wherein the piston (36) acts on all clamping collets (52) in such a way that the piston (36), in its clamping position, acts on the outer surface of said clamping collets directly or indirectly and exerts a radial force thereonto, such that the positioning pin (20) is radially shifted in the housing (22) and arrested along the axial direction, wherein the clamping collet (52) surrounds the positioning pin (20) and the positioning pin (20) is displaceable in the clamping collet (52) along the axial direction,
**characterised in that** the clamping collet (52) has a conical or truncated cone-shaped outer contour.

2. The clamping device according to claim 1, **characterised in that** the positioning pins (20) are arranged at the periphery of the cylinder (34), in particular at equal distances from one another, and dip into the peripheral wall of the cylinder along the axial direction.

3. The clamping device according to any one of the preceding claims, **characterised in that** return springs (32) urging the positioning pins (20) from the housing (22), in particular coil springs (30) surrounding the positioning pins (20), are provided on said positioning pins.

4. The clamping device according to any one of the preceding claims, **characterised in that** a radial slot (54) is provided in the housing (22), through which slot the positioning pins (20) pass and in which slot the clamping collet (52) is mounted.

5. The clamping device according to any one of the preceding claims, **characterised in that** a clamping collet (52) acts on each positioning pin (20).

6. The clamping device according to any one of the preceding claims, **characterised in that** the piston (36) has a truncated cone-shaped portion (50) at its end protruding from the cylinder (34).

7. The clamping device according to claim 6, **characterised in that** the truncated cone-shaped portion (50) of the piston (36), in its clamping position, acts on the clamping collet (52).

8. The clamping device according to any one of the preceding claims, **characterised in that** all clamping collets (52) are arranged at an equal radial distance from the piston (36).

9. The clamping device according to any one of the preceding claims, **characterised in that** a return spring (42), in particular a coil spring, urging the piston (36) into an end position is provided.

10. The clamping device according to any one of the preceding claims, **characterised in that** the suction unit (14), for example a bellows suction cup (16), is surrounded by the positioning pins (20), or **in that** the suction unit (14), for example a flat suction pad (60), is secured to the free ends of the positioning pins (20).

11. The clamping device according to any one of the preceding claims, **characterised in that** the clamping collet (52) has a slot (68) along the axial direction.

12. The clamping device according to any one of the preceding claims, **characterised in that** a driver for clamping sleeves (66) is provided at the free end (48) of the piston (36), and **in that** the clamping sleeves (66) overlap the clamping collets (52) and can be pressed onto the clamping collets (52) along the axial direction by means of the piston (36).

## Revendications

1. Dispositif de serrage (10) comprenant un dispositif d'appui (18) et un dispositif d'aspiration (14) pour aspirer une pièce (12) à serrer, dans lequel le dispositif d'appui (18) comprend un boîtier (22) qui forme un cylindre (34) et sur lequel sont prévues au moins trois goupilles de positionnement (20) faisant saillie dans la direction axiale et déplaçables axialement, dans lequel un piston (36) est disposé à l'intérieur du cylindre (34) à côté des goupilles de positionnement (20), piston (36) qui est mobile le long de la direction axiale, dans lequel une douille de serrage (52) est prévue sur chaque goupille de positionnement (20),
dans lequel ledit piston (36) agit sur l'ensemble des douilles de serrage (52) de telle sorte que le piston (36) s'engage directement ou indirectement, dans sa position de serrage, sur la surface latérale de celles-ci et exerce une force radiale sur celles-ci de sorte que la goupille de positionnement (20) est déplacée radialement dans le boîtier (22) et serrée le long de la direction axiale, dans lequel la douille de serrage (52) embrasse la goupille de positionnement (20), et la goupille de positionnement (20) est déplaçable à l'intérieur de la douille de serrage (52) le long de la direction axiale,
**caractérisé par le fait que** la douille de serrage (52) présente un contour extérieur en forme de cône ou de tronc de cône.

2. Dispositif de serrage selon la revendication 1, **caractérisé par le fait que** les goupilles de positionnement (20) sont disposées sur la circonférence du cylindre (34), en particulier à distances égales les unes des autres, et plongent dans la paroi circonférentielle du cylindre le long de la direction axiale.

3. Dispositif de serrage selon l'une quelconque des revendications précédentes, **caractérisé par le fait que** sur les goupilles de positionnement (20) sont prévus des ressorts de rappel (32) poussant celles-ci hors du boîtier (22), en particulier des ressorts hélicoïdaux (30) embrassant les goupilles de positionnement (20).

4. Dispositif de serrage selon l'une quelconque des revendications précédentes, **caractérisé par le fait qu'**une fente radiale (54) est prévue dans le boitier (22), laquelle est traversée par les goupilles de positionnement (20) et à l'intérieur de laquelle est logée la douille de serrage (52).

5. Dispositif de serrage selon l'une quelconque des revendications précédentes, **caractérisé par le fait qu'**une douille de serrage (52) s'engage sur chaque goupille de positionnement (20).

6. Dispositif de serrage selon l'une quelconque des revendications précédentes, **caractérisé par le fait que** le piston (36) présente une portion tronconique (50) à son extrémité faisant saillie hors du cylindre (34).

7. Dispositif de serrage selon la revendication 6, **caractérisé par le fait que** ladite portion tronconique (50) du piston (36) s'engage, dans la position de serrage de celui-ci, sur la douille de serrage (52).

8. Dispositif de serrage selon l'une quelconque des revendications précédentes, **caractérisé par le fait que** toutes les douilles de serrage (52) présentent une même distance radiale par rapport au piston (36).

9. Dispositif de serrage selon l'une quelconque des revendications précédentes, **caractérisé par le fait que** l'on prévoit un ressort de rappel (42), en particulier ressort hélicoïdal, poussant le piston (36) dans une position terminale.

10. Dispositif de serrage selon l'une quelconque des revendications précédentes, **caractérisé par le fait que** le dispositif d'aspiration (14), par exemple une ventouse à soufflet (16), est entouré des goupilles de positionnement (20), ou que le dispositif d'aspiration (14), par exemple une ventouse plate (60), est fixé aux extrémités libres des goupilles de positionnement (20).

11. Dispositif de serrage selon l'une quelconque des revendications précédentes, **caractérisé par le fait que** la douille de serrage (52) présente une fente (68) le long de la direction axiale.

12. Dispositif de serrage selon l'une quelconque des revendications précédentes, **caractérisé par le fait qu'**un entraîneur pour manchons de serrage (66) est prévu à l'extrémité libre (48) du piston (36), que les manchons de serrage (66) viennent en prise sur les douilles de serrage (52) et peuvent être pressés sur les douilles de serrage (52) au moyen du piston (36) le long de la direction axiale.
